Europäisches Patentamt

European Patent Office

Office européen des brevets

(19)

(11) Numéro de publication : **0 678 680 A1**

# (12) DEMANDE DE BREVET EUROPEEN

(21) Numéro de dépôt : 95400587.2

(22) Date de dépôt : **17.03.95**

(51) Int. Cl.⁶ : **F16C 1/26**

(30) Priorité : **22.03.94 FR 9403318**

(43) Date de publication de la demande :
**25.10.95 Bulletin 95/43**

(84) Etats contractants désignés :
**DE ES GB IT**

(71) Demandeur : **Société Anonyme dite: REGIE NATIONALE DES USINES RENAULT**
**34, quai du Point du Jour**
**F-92109 Boulogne Billancourt (FR)**

(72) Inventeur : **Hennequet, Gonzalo**
**1, rue Jean Mermoz**
**F-92500 Rueil Malmaison (FR)**

(74) Mandataire : **Ernst-Schonberg, Michel et al**
**REGIE NATIONALE DES USINES RENAULT,**
**Société Anonyme dite:,**
**Service 02 67,**
**860, Quai de Stalingrad**
**F-92109 Boulogne-Billancourt (FR)**

(54) **Dispositif de filtrage de vibrations dans une commande à cable.**

(57)    Dispositif de filtrage de vibrations transmises par un organe (12) attelé à l'extrémité d'un câble (5) à une portion dudit câble localisée entre ledit organe (12) et une paroi (10) sur laquelle prend appui un tampon élastique (20) disposé entre ladite paroi (10) et un embout (26) solidaire d'une gaine (7) de protection du câble, caractérisé par le fait que le tampon élastique (20) se prolonge en direction de l'organe (12) transmetteur de vibrations par un manchon (31) de maintien et de coulissement du câble, pouvant comporter une masse (34) sur la partie extérieure dudit manchon (31).

EP 0 678 680 A1

La présente invention concerne un dispositif de filtrage des vibrations dans une commande à câble.

On sait, par exemple, qu'un organe tel qu'une machine, soumise à une action périodique, transmet des vibrations à son support. Pour atténuer les vibrations du support, on interpose entre celui-ci et la machine, des systèmes élastiques (ressorts, caoutchouc, etc...). Lorsque les caractéristiques de raideur et d'amortissement du système interposé sont correctement choisies, on peut obtenir la réduction de l'amplitude des vibrations du support. Cette manière de procéder conduit toutefois à une augmentation de l'encombrement des systèmes élastiques et lorsque l'organe est soumis à une action de périodicité variable, la réduction de l'amplitude des vibrations n'est plus réalisable. On fait alors appel à l'absorption sélective de vibrations par un système oscillant en utilisant une masse additionnelle sujette à des vibrations dont la fréquence de résonance est nettement plus faible que la fréquence de l'action périodique exercée sur la machine.

Or il a été constaté qu'une liaison constituée par un ensemble d'organes transmettant des vibrations est assimilable à une chaîne d'éléments pesants de masses différentes (mi) reliées entre elles par des éléments élastiques de raideur (ki).

Si l'un des éléments est soumis à un signal périodique Yi à l'entrée, il transmet par oscillation à la sortie un signal périodique Xi, tel que le rapport Gi = Xi/Yi appelé gain, varie en fonction de la fréquence du signal Yi, le gain global de la liaison étant généralement égal au produit des gains élémentaires. Selon que la fréquence du signal Yi est supérieure ou inférieure à une certaine valeur de la fréquence de résonance de l'élément, l'ensemble se comporte comme un amplificateur ou un réducteur de signaux.

Selon la publication FR-A-2191666, on associe au moins une masse à une liaison, séparée par des éléments élastiques, ladite masse étant animée d'un mouvement périodique de pulsation $\omega 1 = \sqrt{\dfrac{P + Q}{m}}$ où P et Q sont les raideurs des éléments élastiques associés à la masse, de sorte que le signal Xi généré par l'ensemble des organes soit sensiblement nul lorsque la pulsation du signal périodique est nettement supérieure à la pulsation $\omega 1$.

Un tel dispositif de filtrage empêche par exemple la transmission des vibrations produites par les carters d'embrayage lors des manoeuvres de débrayage ou d'embrayage, nécessaires aux changements du rapport de transmission.

La publication FR-A-2578600 décrit un dispositif de filtrage dans lequel un élément élastique isole le carter de la gaine du câble. Toutefois lorsque les vibrations sont générées au niveau du disque d'embrayage, celles-ci sont transmises au câble de commande par le diaphragme, la butée d'embrayage et sa fourchette de commande. Il en résulte que le câble est soumis à un régime vibratoire entretenu dont la fréquence dépend notamment de sa tension initiale et de sa longueur. Ce régime vibratoire génère des légers déplacements du câble dans sa gaine, des vibrations sonores et des bruits parasites dont l'amplitude varie par exemple au cours des modifications de la tension du câble consécutives aux changements de position d'une pédale de commande.

Les dispositifs de filtrage connus arrêtent de la sorte la perturbation vibratoire dans une bande de fréquences limitée mais sont inefficaces lors des modifications du régime vibratoire, consécutives aux pressions exercées sur la pédale de commande du câble.

L'invention a ainsi pour objet un dispositif de filtrage comportant un moyen d'absorption de l'énergie vibratoire.

L'invention a également pour objet un dispositif de filtrage comportant un moyen de maintien du câble au contact duquel s'opère une absorption de l'énergie vibratoire en amont de sa gaine de protection.

Un autre objet de l'invention est un dispositif de filtrage de conception simplifiée qui se propose d'absorber l'ensemble des vibrations selon leur sens de propagation dans le but d'éviter la transmission de celles-ci à la gaine de protection.

L'invention a plus particulièrement pour objet un dispositif de filtrage dans lequel un organe attelé à l'extrémité d'un câble transmet des vibrations à une portion dudit câble, localisée entre ledit organe et une paroi sur laquelle prend appui un tampon élastique disposé entre ladite paroi et un embout solidaire de la gaine de protection du câble.

Dans le but d'absorber l'énergie générée par le câble soumis à un régime vibratoire entretenu, il est prévu conformément à l'invention, un manchon de maintien et de coulissement d'une portion de câble raccordé au tampon élastique.

Le dispositif ainsi réalisé absorbe une grande partie de l'énergie vibratoire en donnant au câble la rigidité souhaitée à proximité de la paroi. L'énergie vibratoire est ainsi absorbée conjointement par le manchon de maintien du câble et par le tampon élastique.

Par ailleurs étant donné qu'une partie de l'énergie vibratoire est absorbée par le frottement du câble dans le manchon, les pulsations axiales du câble sont amorties en amont de l'habitacle du véhicule.

D'autres caractéristiques et avantages du dispositif de filtrage ressortiront à la lecture de la description d'un exemple de réalisation de celui-ci, en référence au dessin annexé dans lequel :

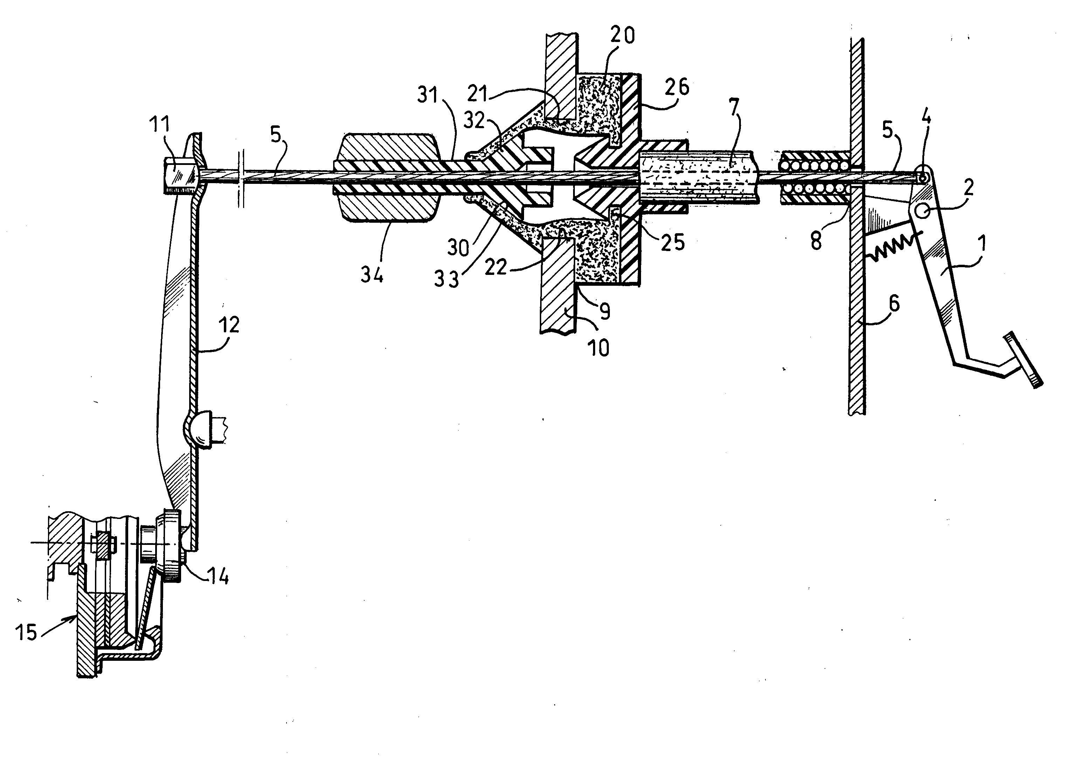

- la figure 1 est une représentation schématique d'une commande d'embrayage avec vue en coupe du dispositif de filtrage.

A la figure 1, on a représenté un dispositif de commande d'embrayage d'un véhicule automobile qui comprend une pédale 1 montée de façon articulée sur un pivot fixe 2, ladite pédale étant reliée à sa partie supérieure 4 à l'extrémité d'un câble métallique 5. Le câble 5 qui traverse une paroi 6 du tablier de la carrosserie est engagé dans une gaine de protection 7 qui est fixée d'une part en 8 à la paroi 6 et, d'autre part, en 9 à une paroi 10 du carter d'embrayage disposé dans le compartiment du moteur du véhicule.

Le câble 5 est relié par son autre extrémité 11 à une fourchette 12 qui agit sur une butée 14 commandant de façon connue un embrayage 15.

Dans le but de filtrer les vibrations transmises par la fourchette 12 à la paroi 10, on associe à la portion du câble 5 localisée entre la fourchette 12 et la paroi 10 un tampon élastique 20 en élastomère.

Suivant le mode de réalisation du dispositif représenté au dessin, le tampon 20 porte une gorge extérieure 21 d'encastrement au contact du bord découpé d'une ouverture 22 de la paroi 10. La face latérale du tampon 20 s'étend radialement vers l'axe d'orientation de celui-ci et délimite une nervure 25 de rétention d'un embout plastique 26 porteur de la gaine 7.

Le tampon 20 agencé entre la paroi 10 et l'embout 26, possède ici une portée intérieure conique 30 de retenue axiale d'un manchon rectiligne 31 de maintien du câble 5.

Le manchon 31 possède un perçage axial de passage du câble 5 et est dirigé vers la fourchette 12. Enfin dans le but de solidariser le tampon 20 au manchon 31, ce dernier possède une tête de retenue 32 sur laquelle est surmoulé l'extrémité flexible 33 du tampon 20.

Une masse auxiliaire 34 peut être montée sur la partie extérieure du manchon 31, dans le but de rendre plus efficace la filtration des vibrations transmises par le câble. Ladite masse possède un diamètre extérieur inférieur au diamètre de l'ouverture 22 afin de faciliter le montage sur véhicule du dispositif assemblé.

## Revendications

**1)** Dispositif de filtrage de vibrations transmises par un organe (12) attelé à l'extrémité d'un câble (5) à une portion dudit câble localisée entre ledit organe (12) et une paroi (10) sur laquelle prend appui un tampon élastique (20) prolongé en direction de l'organe (12) transmetteur de vibrations par un manchon (31) de maintien et de coulissement du câble et dans lequel ledit tampon élastique (20) est disposé entre ladite paroi (10) et un embout (26) solidaire d'une gaine (7) de protection du câble, caractérisé par le fait que le manchon (31) de maintien du câble porte une tête de retenue (32) solidaire de l'extrémité du tampon élastique (20) et supporte une masse auxiliaire 34.

**2)** Dispositif selon la revendication 1, caractérisé par le fait que le tampon élastique (20) possède une gorge extérieure (21) d'encastrement au contact de la paroi (10), une portée intérieure (30) de retenue axiale du manchon (31) de maintien du câble (5) et une nervure (25) de rétention de l'embout (26) porteur de la gaine de protection (7) dudit câble.

EP 0 678 680 A1

**Office européen des brevets**

# RAPPORT DE RECHERCHE EUROPEENNE

Numero de la demande

EP 95 40 0587

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB-A-2 071 254 (BOWDEN CONTROLS LTD)<br>* page 2, ligne 50 - page 3, ligne 46;<br>figures 1,2 *<br>--- | 1 | F16C1/26 |
| A | EP-A-0 042 721 (TELEFLEX INCORPORATED)<br>* le document en entier *<br>--- | 2 | |
| D,A | FR-A-2 191 666 (RÉGIE NATIONALE DES USINES RENAULT ET SA AUTOMOBILES PEUGEOT)<br>* page 3, ligne 16 - ligne 22; figure 2 *<br>--- | 1 | |
| A | US-A-4 726 251 (D.L. NISKANEN)<br>--- | | |
| A | US-A-4 773 278 (MOTOYOSHI HANAOKA ET AL)<br>--- | | |
| A | FR-A-2 398 914 (SOCIÉTÉ ANONYME D.B.A.)<br>----- | | |

**DOMAINES TECHNIQUES RECHERCHES (Int.Cl.6)**

F16C

Le présent rapport a été établi pour toutes les revendications

| Lieu de la recherche | Date d'achèvement de la recherche | Examinateur |
|---|---|---|
| BERLIN | 30 Juin 1995 | Hoffmann, M |